# FASCICULE DE BREVET EUROPEEN

(11) **EP 0 800 850 B1**
(45) Date de publication et mention de la délivrance du brevet: **13.01.1999**
(21) Numéro de dépôt: 97400790.8
(22) Date de dépôt: 07.04.1997
(51) Int. Cl.: B01D 29/21, B01D 35/18

(54) **Dispositif de filtrage et de refroidissement d'huile**
Vorrichtung zur Filterung und Kühlung von Öl
Oil filtering and cooling device

(30) Priorité: 10.04.1996 FR 9604456
(43) Date de publication de la demande: 15.10.1997
(73) Titulaire: FILTRAUTO, F-78180 Montigny le Bretonneux (FR)
(72) Inventeur: Pigeau, Jean-Michel, 91220 Bretigny Sur Orge (FR); Chivet, Thierry, 78000 Versailles (FR); Andrieu, Ronan, 78790 Septeuil (FR)
(74) Mandataire: Loisel, Bertrand

(56) Documents cités:
- EP-A- 0 200 809
- EP-A- 0 631 804
- US-A- 4 831 980

## Description

La présente invention concerne des dispositifs combinant un filtre à huile et un échangeur thermique, pour filtrer et refroidir de l'huile pour moteurs à combustion interne.

L'invention concerne plus précisément de tels dispositifs comportant une enveloppe pourvue d'un orifice d'entrée d'huile et d'un orifice de sortie d'huile, et un couvercle fixé de manière amovible sur l'enveloppe pour délimiter avec celle-ci un espace dans lequel se logent d'une part un élément filtrant amovible que traverse l'huile entre l'orifice d'entrée et l'orifice de sortie, et d'autre part un échangeur thermique procurant un trajet de refroidissement de l'huile entre l'élément filtrant et l'un au moins desdits orifices, associé à un trajet de circulation d'un fluide de refroidissement, tel que de l'eau.

L'élément filtrant peut être retiré en démontant le couvercle amovible, et remplacé par un élément propre. Deux configurations générales sont possibles pour l'association entre le couvercle et l'élément filtrant :
- dans la première configuration, dont un exemple est donné dans la demande de brevet européen 0 200 809, le couvercle est indissociable de l'élément filtrant, et forme avec celui-ci une cartouche remplaçable ;
- dans la seconde configuration, généralement plus économique, seul l'élément filtrant est remplacé lorsqu'il est encrassé, cet élément pouvant soit être complètement indépendant du couvercle soit y être fixé de manière amovible. Un dispositif de ce genre est décrit dans le brevet français 2 707 519.

Un inconvénient des dispositifs connus est le nombre relativement important de pièces à monter, notamment de pièces d'étanchéité. En effet, il convient d'assurer l'étanchéité entre l'huile sale et chaude, l'huile sale et refroidie, l'huile filtrée et refroidie, l'eau de refroidissement, et le milieu extérieur. Les nombreux joints d'étanchéité à prévoir affectent la fiabilité du dispositif. En outre, leur mise en place lors du montage en usine peut poser des problèmes, notamment en ce qu'elle requiert d'assez nombreuses opérations manuelles.

Un autre inconvénient des dispositifs connus est qu'ils laissent assez peu de liberté dans le positionnement des entrées et sorties d'eau et d'huile de l'échangeur thermique. Ces entrées et sorties doivent souvent être axiales pour permettre une installation commode de l'échangeur dans son enveloppe. Sinon, il est nécessaire de rapporter à l'extérieur de l'enveloppe des tubulures d'entrée et de sortie, ce qui complique de nouveau le processus de fabrication.

Un but de la présente invention est de simplifier la constitution des dispositifs de filtrage et de refroidissement d'huile, de limiter le nombre de pièces requises, et de traiter de façon simple et économique les problèmes d'étanchéité.

L'invention propose ainsi un dispositif de filtrage et de refroidissement d'huile du type indiqué au début, dans lequel l'enveloppe est en une seule pièce directement moulée sur l'échangeur thermique.

L'enveloppe du dispositif assure ainsi, outre sa fonction de conteneur, des fonctions d'étanchéité permettant de se dispenser de certains joints supplémentaires nécessaires dans les dispositifs antérieurs. Ceci résulte du contact entre la matière moulée et l'extérieur de l'échangeur thermique.

Le processus de fabrication du dispositif s'en trouve simplifié. Les tolérances dimensionnelles requises sont facilement satisfaites grâce au moulage. Ce dernier avantage peut être obtenu même si l'échangeur thermique n'a pas des dimensions très précisément définies, ce qui est souvent le cas pour les échangeurs à plaques métalliques brasées qui sont connus pour présenter de bonnes performances thermiques.

Le fait de mouler l'enveloppe autour de l'échangeur donne par ailleurs une plus grande liberté de positionnement des entrées et sorties de fluide (huile et eau), du fait des moindres contraintes de montage. Ceci permet de répondre à des problèmes d'encombrement auxquels peuvent être confrontés les concepteurs de groupes moteurs. On obtient également une plus grande liberté dans le choix de la forme et/ou des dimensions de l'échangeur lui-même.

D'autres particularités et avantages de la présente invention apparaîtront dans la description ci-après d'exemples de réalisation non limitatifs, en référence aux dessins annexés, dans lesquels :

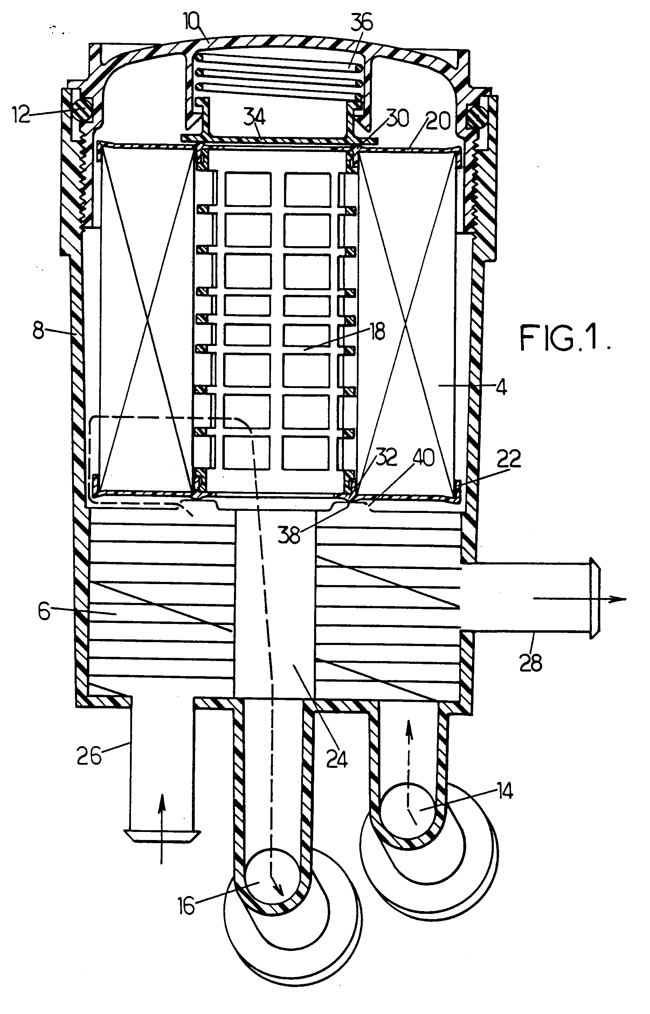

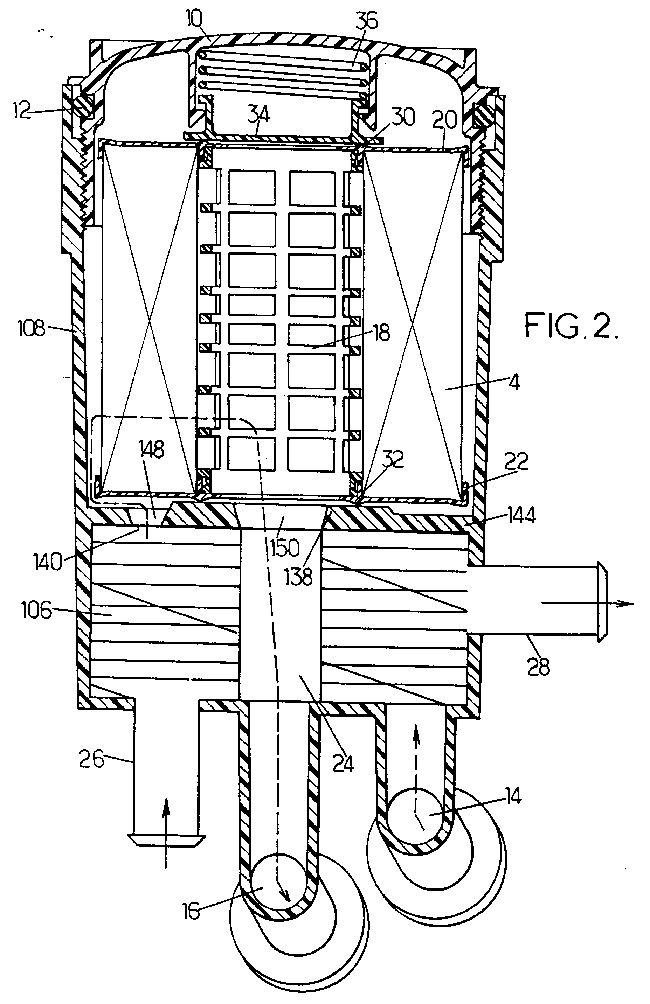

- les figures 1 et 2 montrent, en coupe axiale, deux dispositifs de filtrage et de refroidissement selon l'invention.

Le dispositif représenté sur la figure 1 comprend un élément filtrant 4 et un échangeur thermique 6 placés dans une enveloppe 8. L'enveloppe 8 définit une cuve fermée à son extrémité supérieure par un couvercle amovible 10. La liaison entre le couvercle 10 et l'enveloppe 8 peut être à vis (comme représenté), à baïonnettes ou autre. Un joint torique 12 assure l'étanchéité entre l'enveloppe 8 et le couvercle 10. A la base de l'enveloppe 8 sont ménagés un orifice d'entrée d'huile 14 et un orifice de sortie d'huile 16 constitués, dans l'exemple représenté, par deux tubulures dont les extrémités sont agencées pour être montées sur un carter de moteur.

De façon classique, l'élément filtrant 4 est constitué par un cylindre de papier plissé placé autour d'un tube ajouré 18, et maintenu axialement entre deux flasques 20, 22 solidaires du tube 18. L'élément filtrant 4, qui forme une unité avec le tube 18 et les flasques 20, 22, est accessible lorsque le couvercle 10 est enlevé, ce qui permet son remplacement.

L'échangeur thermique 6, représenté schématiquement sur la figure, a une constitution générale classique. Il comprend un alésage central 24 communiquant vers le fond de la cuve avec l'orifice de sortie d'huile 16, et, sur la face opposée de l'échangeur, avec l'intérieur du tube ajouré 18. Autour de cet alésage 24, l'échangeur 6 comprend deux trajets de circulation de fluide enchevêtrés ayant entre eux une surface d'échange thermique relativement importante. Le trajet de circulation de l'eau (ou autre fluide) de refroidissement s'étend entre une tubulure d'admission 26 et une tubulure de sortie 28. Dans l'exemple représenté, la tubulure d'admission 26 est axiale, et la tubulure de sortie 28 est latérale, mais il est bien entendu que d'autres positions seraient possibles selon les contraintes d'encombrement que pose l'environnement du dispositif. Le trajet de circulation de l'huile à refroidir fait communiquer l'orifice d'entrée d'huile 14 avec le compartiment de la cuve contenant l'élément filtrant 4.

L'échangeur thermique 6 est de préférence réalisé à partir de plaques métalliques, par exemple en aluminium, brasées les unes sur les autres pour délimiter les deux trajets enchevêtrés. Un exemple d'un tel échangeur est décrit dans la demande de brevet européen 0 694 679. Les deux trajets peuvent être entièrement définis entre les plaques métalliques brasées, ce qui procure d'excellents rendements d'échange. Dans d'autres types d'échangeurs utilisables, les plaques métalliques brasées séparent simplement les deux trajets l'un de l'autre, une paroi métallique supplémentaire séparant chacun des trajets de l'extérieur, sur la périphérie de l'échangeur et dans l'alésage 24.

Comme le montrent les flèches en traits interrompus sur la figure 1, l'huile provenant du moteur entre dans la cuve par l'orifice d'entrée 14, traverse l'échangeur thermique 6 le long de son trajet de refroidissement, est guidée vers l'extérieur de l'élément filtrant cylindrique 4, traverse ce dernier vers l'intérieur du tube ajouré 18, et, de là, rejoint l'orifice de sortie 16 à travers l'alésage 24 de l'échangeur.

L'étanchéité entre l'huile filtrée et non filtrée est réalisée au moyen de lèvres annulaires 30, 32 présentes sur les faces externes des flasques 20, 22 maintenant l'élément filtrant 4. A la partie supérieure de l'élément filtrant 4, la lèvre 30 s'applique contre une plaque de fermeture 34 supportée par le couvercle 10 et sollicitée vers l'élément filtrant par un ressort 36 travaillant en compression. La plaque 34 obture l'extrémité supérieure du tube ajouré 18. De façon connue et non représentée, la plaque 34 pourrait être pourvue d'un clapet taré servant de dérivation en cas d'encrassement excessif de l'élément filtrant 4.

La lèvre 32 de l'autre flasque 22 s'applique contre une protubérance annulaire complémentaire 38 présente sur la face supérieure de l'échangeur thermique 6. Dans l'exemple représenté sur la figure 1, la sortie d'huile de l'échangeur 6 est constituée par une ou plusieurs ouvertures 40 prévues sur sa face supérieure, en une position telle que la ligne de contact entre la lèvre 32 et la protubérance annulaire 38 soit située entre ces ouvertures 40 et l'alésage central 24. Les ouvertures 40 peuvent notamment être situées sur le flanc extérieur de la protubérance annulaire 38, comme représenté.

Conformément à l'invention, l'enveloppe 8 est réalisée en une seule pièce moulée directement sur l'échangeur thermique 6. Le contact intime entre la matière moulée de l'enveloppe 8 et les faces extérieures de l'échangeur thermique 6 assure un certain nombre de fonctions d'étanchéité :
- en empêchant l'huile refroidie mais encore sale de s'infiltrer le long de la périphérie de l'échangeur 6 vers l'extérieur (autour des tubulures 26, 28),
- en empêchant l'huile chaude et sale parvenant par l'orifice d'entrée 14 de s'infiltrer vers l'orifice de sortie 16 ou vers l'extérieur (autour des tubulures 26, 28), et
- en empêchant l'huile refroidie et filtrée sortant de l'alésage 24 de s'infiltrer vers l'orifice d'entrée 14 ou vers l'extérieur (autour des tubulures 26, 28).

L'enveloppe moulée 8 est de préférence réalisée en matière plastique, bien que d'autres matières moulables soient envisageables (alliages d'aluminium par exemple). Cette matière plastique est par exemple un polyamide chargé avec 30 à 50% de fibres de verre. Ce matériau est moulable par injection à haute température (de l'ordre de 250°C), et à haute pression (de l'ordre de 600 bars). Pour réaliser l'enveloppe moulée 8, on met en place, dans un moule d'injection de forme appropriée, l'échangeur thermique 6 ainsi que des inserts destinés à combler (i) le volume du compartiment qui sera occupé par l'élément filtrant 4, (ii) l'alésage 24 de l'échangeur ; et (iii) l'intérieur des tubulures définissant les orifices d'entrée et de sortie d'huile 14, 16. Les inserts sont notamment agencés pour boucher hermétiquement les ouvertures 40 par lesquelles l'huile refroidie sort de l'échangeur thermique 6.

L'échangeur thermique peut classiquement être pourvu d'un clapet taré (non représenté) servant de dérivation pour l'huile entre l'orifice d'entrée et le compartiment contenant l'élément filtrant en cas de perte de charge excessive dans le trajet de refroidissement d'huile, ce clapet pouvant faire partie de l'échangeur lui-même ou lui être associé lors de l'injection.

La variante de réalisation représentée sur la figure 2 diffère de celle de la figure 1 en ce que l'enveloppe 108 à partir de laquelle est réalisée la cuve comporte une paroi 144 séparant l'échangeur thermique 106 du compartiment dans lequel se trouve l'élément filtrant 4. La confection de cette paroi 144 lors du moulage résulte d'une adaptation de la forme des inserts placés dans le moule d'injection.

La lèvre annulaire 32 du flasque inférieur 22 maintenant l'élément filtrant 4 prend appui contre un rebord annulaire 138 de la paroi moulée 144 pour empêcher le mélange de l'huile filtrée avec l'huile non filtrée.

Dans l'exemple représenté sur la figure 2, la sortie d'huile refroidie de l'échangeur thermique 106 est constituée par une ouverture 140 ménagée dans la face supérieure de l'échangeur. Cette ouverture 140 est bouchée par un insert approprié lors de l'injection, ce qui laisse dans la paroi 144 une ouverture 148 située à l'extérieur du rebord 138 relativement à la position de l'alésage 24 de l'échangeur. Cette ouverture 148 fait communiquer le trajet de refroidissement de l'huile dans l'échangeur avec la partie du compartiment contenant l'élément filtrant 4 qui est extérieure à ce dernier. La paroi 144 présente une autre ouverture 150 en regard de l'alésage 24, pour faire communiquer l'intérieur du tube ajouré 18 avec l'orifice de sortie d'huile 16.

Un avantage intéressant du mode de réalisation illustré sur la figure 2 est qu'il procure de façon simple une excellente précision dans les dimensions de l'ensemble. Dans la pratique, la précision dimensionnelle, surtout en hauteur, d'un échangeur à plaques brasées n'est pas très bonne. Dans le moule d'injection, l'épaisseur de la matière moulée de la paroi 144 s'adapte pour compenser l'imprécision dans la hauteur de l'échangeur.

On comprendra que diverses variantes peuvent être apportées aux exemples de réalisation précédemment décrits, sans sortir du cadre de la présente invention. Par exemple, le couvercle pourrait se prolonger vers le bas pour former une jupe entourant l'élément filtrant jusqu'à la zone où se trouve l'échangeur thermique, et se raccorder à l'enveloppe moulée dans cette zone. Dans ce cas, l'enveloppe moulée n'entoure pas nécessairement le compartiment contenant l'élément filtrant. On peut également prévoir que le couvercle soit indissociable de l'élément filtrant pour constituer une cartouche jetable avec ce dernier.

## Revendications

1. Dispositif de filtrage et de refroidissement d'huile comportant une enveloppe (8;108) pourvue d'un orifice d'entrée d'huile (14) et d'un orifice de sortie d'huile (16), et un couvercle (10) fixé de manière amovible sur l'enveloppe pour délimiter avec celle-ci un espace dans lequel se logent d'une part un élément filtrant amovible (4) que traverse l'huile entre l'orifice d'entrée et l'orifice de sortie, et d'autre part un échangeur thermique (6;106) procurant un trajet de refroidissement de l'huile entre l'élément filtrant et l'un au moins desdits orifices, associé à un trajet de circulation d'un fluide de refroidissement, caractérisé en ce que ladite enveloppe (8;108) est en une seule pièce directement moulée sur l'échangeur thermique (6;106).

2. Dispositif selon la revendication 1, caractérisé en ce que l'enveloppe (108) comporte une paroi (144) séparant l'échangeur thermique (106) d'un compartiment contenant l'élément filtrant (4), cette paroi ayant au moins deux ouvertures (148,150) faisant respectivement communiquer ledit compartiment avec les orifices d'entrée (14) et de sortie (16) de l'enveloppe à travers l'échangeur thermique.

3. Dispositif selon la revendication 1 ou 2, caractérisé en ce que l'enveloppe (8;108) est en matière plastique.

4. Dispositif selon l'une quelconque des revendications 1 à 3, caractérisé en ce que l'échangeur thermique (6;106) est réalisé à partir de plaques métalliques brasées les unes sur les autres.

## Claims

1. A device for filtering and cooling oil, comprising a jacket (8, 108) provided with an oil inlet aperture (14) and an oil outlet orifice (16), and a cover (10) fixed in removable fashion on the casing to define therewith a space in which are housed firstly a removable filtering element (4) through which the oil passes between the inlet aperture and the outlet orifice and secondly a heat exchanger (6; 106) producing an oil cooling path between the filtering element and at least one of the said apertures, associated with a cooling fluid circulating path, characterised in that the said casing (8; 108) is directly moulded on and is integral with the heat exchanger (6, 106).

2. A device according to claim 1, characterised in that the casing (108) comprises a wall (144) separating the heat exchanger (106) from a compartment containing the filtering element (4), this wall having at least two apertures (148, 150) which form respective communications between the said compartment and the inlet aperture (14) and outlet orifice (16) in the casing, via the heat exchanger.

3. A device according to claim 1 or 2, characterised in that the casing (8, 108) is of plastics material.

4. A device according to any one of claims 1 to 3, characterised in that the heat exchanger (6; 106) is made from metal plates which are soldered onto one another.

## Patentansprüche

1. Vorrichtung zur Filterung und zur Kühlung von Öl, die aufweist
einen Mantel (8; 108), der mit einer Öleinlaßöffnung (14) und einer Ölauslaßöffnung (16) versehen ist, und
eine Abdeckung (10), die unbeweglich am Mantel befestigt ist, um mit diesem einen Raum abzugrenzen, in dem sich einerseits ein unbewegliches Fiiterelement (4), das das Öl zwischen der Einlaßöffnung und der Auslaßöffnung durchquert, und andrerseits ein Wärmetauscher (6; 106) befindet, der zwischen dem Filterelement und zumindest einem der Stutzen einen Ölkühlpfad vorsieht und der mit einem Umlaufpfad von einem Kühlfluid verbunden ist, dadurch gekennzeichnet, daß der Mantel (8; 108) einstückig direkt auf den Wärmetauscher (6; 106) gegossen ist.

2. Vorrichtung nach Anspruch 1, dadurch gekennzeichnet, daß der Mantel (108) eine Wand (144) aufweist, die den Wärmetauscher (106) von einer das Filterelement (4) aufweisenden Kammer trennt, wobei diese Wand zumindest zwei Löcher (148, 150) hat, die die Kammer mit der Einlaßöffnung (14) und der Auslaßöffnung (16) des Mantels durch den Wärmetauscher hindurch jeweilig verbinden.

3. Vorrichtung nach Anspruch 1 oder 2, dadurch gekennzeichnet, daß der Mantel (8; 108) aus Plastwerkstoff ist.

4. Vorrichtung nach einem der Ansprüche 1 bis 3, dadurch gekennzeichnet, daß der Wärmetauscher (6; 106) von aufeinandergelöteten Metallplatten ausgehend umgesetzt ist.
